# EUROPÄISCHE PATENTSCHRIFT

(11) **EP 4 189 189 B1**
(45) Veröffentlichungstag und Bekanntmachung des Hinweises auf die Patenterteilung: **29.10.2025**
(21) Anmeldenummer: 21745950.2
(22) Anmeldetag: 14.07.2021
(51) Int. Cl.: E04D 13/12, E04D 13/00, F24S 25/70, E04D 11/00, F24S 25/10, F24S 25/61, E04F 15/024, F24S 25/00

(54) **STÜTZFUSS**
SUPPORTING FOOT
PIED DE SUPPORT

(30) Priorität: 28.07.2020 DE 102020119900
(43) Veröffentlichungstag der Anmeldung: 07.06.2023
(73) Patentinhaber: fischerwerke GmbH & Co. KG, 72178 Waldachtal (DE)
(72) Erfinder: FÖRMER, Thomas, 72401 Haigerloch-Gruol (DE)
(86) Internationale Anmeldenummer: PCT/EP2021/069548
(87) Internationale Veröffentlichungsnummer: WO 2022/023034

(56) Entgegenhaltungen:
- EP-A1- 2 333 190
- EP-A2- 2 672 034
- KR-A- 20090 012 496
- KR-B1- 100 797 905
- US-A1- 2019 199 276

## Beschreibung

Die Erfindung betrifft einen Stützfuß zur Verwendung auf einem Untergrund mit den Merkmalen des Oberbegriffs des Anspruchs 1. Ein gattungsgemäßer Stützfuß ist aus der europäischen Patentschrift EP 2 333 190 B1 bekannt. Die Patentschrift offenbart einen Stützsockel zum Stützen einer freistehenden Struktur auf einem Flachdach. Der Stützsockel umfasst ein flaches Basisteil zur Anlage auf dem Flachdach. Der Stützsockel umfasst zudem ein Gleitteil, welches bezüglich des Stützsockels in einer Ebene verschwenkbar ist, wobei die Ebene senkrecht zum Stützsockel, respektive zum Flachdach, orientiert ist. In dem Gleitteil ist ein Haltemittel in Form einer Ausnehmung angeordnet. In die Ausnehmung ist das stirnseitige Ende einer Montageschiene zur form- und kraftschlüssigen Klemmung der Montageschiene an dem Stützfuß einsteckbar. Die Montageschiene ist somit zusammen mit dem Gleitteil in der Ebene schwenkbar. Um eine eingestellte Position, respektive eine eingestellte Winkelstellung des Gleitteils, und somit eine Winkelstellung der Montageschiene zum Stützsockel fixieren zu können, muss das Gleitteil mittels zweier Schrauben mit dem Stützsockel geklemmt werden. Nachteilig an der beschriebenen Lösung ist, dass eine exakte Position des Gleitteils nur relativ grob eingestellt werden kann. Zudem muss eine eingestellte Position in einem separaten Schritt gegen ungewolltes Verstellen gesichert werden.

Andere Stützfüße sind ferner aus US 2019/199276 A1, KR 2009 0012496 A und KR 100 797 905 B1 bekannt.

Aufgabe der Erfindung ist es, einen Stützfuß zu schaffen, der präzise und einfach einstellbar ist.

Diese Aufgabe wird erfindungsgemäß durch die Merkmale des Anspruchs 1 gelöst. Vorteilhafte Ausgestaltungen sind in den Unteransprüchen aufgeführt. Die Erfindung betrifft einen Stützfuß zur Verwendung auf einem Untergrund, insbesondere einem drucksensiblen Untergrund, wie einem Flachdach, mit einem Sockel zur Auflage auf dem Untergrund. Der Sockel ist insbesondere als eine runde, quadratische oder rechteckförmige Platte aus einem witterungsbeständigen Kunststoff ausgestaltet, welche eben auf dem Untergrund zur Auflage kommt. Durch die Ausgestaltung des Sockels ist gewährleistet, dass bei einer Lastaufnahme des Stützfußes, welche bis zu 20 kN betragen kann, keine oder nur geringfügige Druckstellen auf dem Untergrund entstehen und der Untergrund folglich nicht beschädigt wird. Der Stützfuß umfasst ein Haltesystem zur Aufnahme einer Montageschiene. Die Montageschiene ist insbesondere mit einem stirnseitigen Ende in das Haltesystem einlegbar. Zudem sind am Haltesystem insbesondere Haltemittel wie Spannschrauben, Bügel oder dergleichen angeordnet, welche die Montageschiene kraftschlüssig im Haltesystem fixieren. Das Haltesystem ist bezüglich des Sockels in einer Ebene schwenkbar. Die Ebene ist insbesondere orthogonal zum Sockel und somit insbesondere orthogonal zum Untergrund orientiert. Eine Schwenkbarkeit ist notwendig um mögliche Neigungen des Untergrunds, insbesondere einer Dachneigung eines Flachdachs, auszugleichen. Der Stützfuß kann eine Mittelstellung annehmen, in welcher das Haltesystem, respektive die Montageschiene, in einem rechten Winkel zum Sockel orientiert ist. Ausgehend von der Mittelstellung ist das Haltesystem bevorzugt um ± 30°, besonders bevorzugt um ± 10° in der Ebene schwenkbar, wodurch eine mögliche Neigung ausgeglichen werden kann.

Kennzeichnend für die Erfindung ist, dass der Stützfuß ein bezüglich des Sockels ortsfestes, aber um eine Drehachse drehbares Bedienelement umfasst, das derart angeordnet ist, dass durch eine Drehung des Bedienelements um die Drehachse in einer ersten Drehrichtung, das Haltesystem in der Ebene in eine erste Richtung schwenkbar ist und durch eine Drehung in eine zweite Drehrichtung, die der ersten Drehrichtung entgegengesetzt ist, das Haltesystem in der Ebene in eine zweite, der ersten Richtung entgegengesetzten Richtung, schwenkbar ist. Unter "ortsfest" ist zu verstehen, dass das Bedienelement am oder im Sockel drehbar gelagert ist. Die Drehachse steht nicht senkrecht zur Ebene und ist insbesondere orthogonal zu dem Sockel orientiert. Durch das Bedienelement kann das Haltesystem und somit die darin befindliche Montageschiene stufenlos in die erste und die zweite Richtung geschwenkt werden. Das Bedienelement ist insbesondere derart ausgestaltet, dass es von einem Benutzer des Stützfußes leicht gegriffen werden kann. Durch das Bedienelement muss zum Verstellen das Haltesystem oder die Montageschiene nicht direkt gegriffen werden. Das Bedienelement steht mit dem Haltesystem derart unmittelbar oder mittelbar in Wirkverbindung, dass eine Drehung des Bedienelements in die erste oder die zweite Drehrichtung zu einer Schwenkbewegung des Haltesystems in die erste oder die zweite Richtung führt. Unter "mittelbar" ist zu verstehen, dass zwischen dem Bedienelement und dem Haltesystem weitere Elemente angeordnet sein können, die die Drehbewegung des Bedienelements auf das Haltesystem übertragen. Derartige Elemente können beispielsweise Hebel, Räder oder dergleichen sein. Das Bedienelement ist mit dem Haltesystem somit direkt oder indirekt in form- und/oder reibschlüssigem Wirkkontakt. Weil die Drehachse nicht senkrecht zur Ebene steht, ist die Drehachse nicht gleichachsig mit der Schwenkachse des Haltesystems. Es muss daher auf jeden Fall eine getriebeartige Übersetzung der Drehbewegung des Bedienelements zur Schwenkbewegung des Haltesystems existieren. Die Übersetzung ermöglicht eine einfache und präzise Einstellbarkeit.

In einer weiteren vorteilhaften Ausgestaltung der Erfindung ist das Bedienelement als ein Bedienrad ausgestaltet, welches insbesondere eine Art Hohlzylinder mit einem bezüglich der Drehachse rotationssymmetrisch ausgeführten domartigen Innenzylinder ist. Anders formuliert weist das Bedienelement insbesondere eine bezüglich der Drehachse rotationssymmetrisch gekrümmte Innenfläche auf. Das Bedienelement umfasst ein Gewinde, welches insbesondere an der gekrümmten Innenfläche angeordnet ist, oder eine Verzahnung, welche insbesondere an einer Außenseite des Bedienrads angeordnet ist. Insbesondere weist das Bedienrad zudem an der Außenseite einen Griffbereich für den Benutzer auf, über welchen das Bedienrad leicht gegriffen und folglich gedreht werden kann. Das Gewinde oder die Verzahnung greift in ein Teilgewinde oder eine Teilverzahnung des Haltesystems ein. Dies hat zur Folge, dass die Drehung des Bedienrads um die Drehachse eine Schwenkbewegung des Haltesystems in die erste oder die zweite Richtung bewirkt. Insbesondere ragt das Haltesystem ins Innere des Bedienrads, wodurch ein Eingriff des Gewindes in das Teilgewinde konstruktiv begünstigt ist. Anders formuliert ist das Haltesystem insbesondere im Bereich der Drehachse des Bedienrads angeordnet. Das Haltesystem kann jedoch auch exzentrisch zum Bedienrad angeordnet sein. Anders formuliert kann es somit "neben" dem Bedienrad angeordnet sein, wodurch ein Eingriff der Verzahnung in die Teilverzahnung konstruktiv begünstigt ist. Durch die Ausgestaltung des Gewindes und des Teilgewindes, respektive der Verzahnung und der Teilverzahnung, ist es möglich, die Übersetzung zwischen Haltesystem und Bedienelement einzustellen. Beispielsweise könnte eine Drehung des Bedienrads um 360° um die Drehachse ein Schwenken des Haltesystems um 5° bewirken. Die Zahlenwerte sind lediglich beispielhaft. Die Gewinde, respektive die Verzahnungen, können derart aufeinander abgestimmt werden, dass bei einer Drehung des Bedienrads in einem gewissen Winkelbereich das Haltesystem mehr oder weniger stark geschwenkt wird. Hierdurch kann die Stellung des Haltesystems bezüglich des Sockels sehr präzise eingestellt werden. Eine starke Übersetzung begünstigt einerseits die Präzision und andererseits eine Selbsthemmung, womit gemeint ist, dass ein Schwenken des Haltesystems keine Drehung des Bedienelements bewirkt und somit, Spielfreiheit vorausgesetzt, blockiert wird.

In einer weiteren vorteilhaften Ausgestaltung der Erfindung ist das Bedienrad drehbar an dem Sockel oder in einer korrespondierenden Vertiefung im Sockel gelagert. Eine Lagerung des Bedienrads an dem Sockel kann beispielsweise über eine Welle oder einen Zapfen, welche mit dem Sockel verbunden ist, erfolgen. Bevorzugt ist das Bedienrad in einer Vertiefung im Sockel gelagert, wobei die Vertiefung insbesondere derart ausgestaltet ist, dass diese als Drehlager für das Bedienrad dient. Insbesondere ist das Bedienrad spielpassungsartig in die Vertiefung eingesetzt. Insbesondere sind zudem eine oder mehrere Federklammern an der Vertiefung angeordnet, die das Bedienrad in der Vertiefung und somit am Sockel drehbar fixieren. Die Federklammern sind zudem lösbar mit dem Sockel verbunden. Hierdurch kann bei Bedarf das Bedienrad und somit das komplette Haltesystem vom Sockel demontiert werden. Eine weitere Möglichkeit einer Festlegung des Bedienrads am Sockel stellt eine Verbindungsschraube dar. Die Verbindungsschraube ist hierbei insbesondere mittig durch das Haltesystem und das Bedienrad mit dem Sockel verschraubt und hält das Haltesystem und das Bedienrad am Sockel.

Um eine möglichst präzise und leichtgängige Schwenkbarkeit des Haltesystems zu gewährleisten, umfasst erfindungsgemäß das Haltesystem einen insbesondere U-förmigen Schwenkbügel mit einer insbesondere U-förmigen Öffnung zu einer schwenkbaren Lagerung des Haltesystems an dem Sockel, wobei die Form der Öffnung des Schwenkbügels, respektive der Grund der Öffnung, mit der Form einer Gleitfläche des Sockels korrespondiert. Der Schwenkbügel ist insbesondere zentrisch in der Aufnahme im Sockel angeordnet. Die Gleitfläche ist eine insbesondere U-förmige Erhebung und ebenfalls insbesondere zentrisch in der Vertiefung angeordnet. Die Erhebung stellt insbesondere eine Negativform der Öffnung des Schwenkbügels dar. Anders formuliert ist der Bügel mit der Öffnung auf die Erhebung aufgesteckt, derart, dass der Schwenkbügel leichtgängig auf der Gleitfläche in die erste und in die zweite Richtung schwenkbar ist. Der Schwenkbügel wird insbesondere über das Bedienrad, welches insbesondere wiederum über die Federklammern oder die Verbindungsschraube am Sockel fixiert ist, am Sockel gehalten. Das Teilgewinde ist insbesondere auf einer der Öffnung des Schwenkbügels abgewandten Außenfläche des Schwenkbügels angeordnet. Die Form der Außenfläche des Schwenkbügels korrespondiert hierbei insbesondere mit dem insbesondere rotationssymmetrisch ausgeführten domartigen Innenzylinder, respektive der gekrümmten Innenfläche des Bedienrads. Hierdurch ist gewährleistet, dass das Gewinde des Bedienrads und das Teilgewinde des Schwenkbügels optimal ineinandergreifen können, wodurch der Schwenkbügel bezüglich des Sockels geschwenkt wird, wenn das Bedienrad in die erste oder die zweite Drehrichtung gedreht wird.

In einer weiteren vorteilhaften Ausgestaltung der Erfindung weist der Sockel eine erste und eine zweite Führung zur Abstützung des Haltesystems senkrecht zur Ebene auf. Die erste und die zweite Führung sind insbesondere als parallel zueinander verlaufende Flächen ausgestaltet, wobei die Gleitfläche insbesondere zwischen den Flächen angeordnet ist. Die Flächen sind insbesondere orthogonal zur Gleitfläche und parallel zu der Ebene orientiert. Somit bilden die Flächen zusammen mit der Gleitfläche eine Art Nut. Durch die Führungen kann der Schwenkbügel nur Schwenkbewegungen in der Ebene vollführen. Weitere rotatorische oder translatorische Bewegungen sind insbesondere nicht möglich.

In einer weiteren vorteilhaften Ausgestaltung der Erfindung weist das Haltesystem eine Halterung mit Haltemitteln zur form- und/oder kraftschlüssigen Aufnahme der Montageschiene auf. Insbesondere umfasst die Halterung eine Anlagefläche zur Anlage einer Stirnseite der Montageschiene sowie eine Stützfläche auf. Insbesondere sind die Stützfläche und die Anlagefläche orthogonal zueinander orientiert. Insbesondere an der Stützfläche sind die Haltemittel, wie beispielsweise Hammerkopfschrauben, Bügel oder dergleichen angeordnet, über welche die Montageschiene kraftschlüssig an der Halterung festlegbar ist. Die Halterung ist derart gestaltet, dass die Montageschiene nicht ohne die Haltemittel, also nicht ohne eine kraftschlüssige Verbindung an der Halterung festlegbar ist. Hierdurch ist eine stabile Verbindung zwischen Halterung und Montageschiene gewährleistet. Zusätzlich können an der Anlagefläche zwei orthogonal zur Anlagefläche orientierte Stützstreben angeordnet sein, die die Montageschiene zusätzlich stabilisieren. Die Anlagefläche, die Stützfläche und die Stützstreben bilden eine spielpassungsartige Aufnahme für die Montageschiene.

In einer weiteren vorteilhaften Ausgestaltung der Erfindung ist die Halterung an dem Schwenkbügel festlegbar. Hierzu weist der Schwenkbügel insbesondere einen Verbindungszapfen auf einer der Öffnung abgewandten Seite auf. Der Verbindungszapfen korrespondiert insbesondere mit einer Verbindungsaufnahme der Halterung. Der Verbindungszapfen ist in die Aufnahme steckbar. Insbesondere ist die Verbindungsaufnahme auf dem Verbindungszapfen drehbar, wodurch die Halterung auf dem Schwenkbügel drehbar ist. Dadurch kann die in der Halterung festgelegte Montageschiene zusätzlich zu der Schwenkbarkeit in die erste und in die zweite Richtung um ihre Längsachse gedreht werden.

Um zu vermeiden, dass zusätzliche Fixierungsmittel benötigt werden, um das Haltesystem in einer gewünschten Position festzulegen, hält in einer weiteren vorteilhaften Ausgestaltung der Erfindung das Bedienelement das Haltesystem selbsthemmend in einer eingestellten Position. Hierbei spielt, wie bereits erwähnt, die Übersetzung vom Bedienelement zum Haltesystem eine wichtige Rolle. Insbesondere ist die Selbsthemmung durch das Gewinde am Bedienelement und das korrespondierende Teilgewinde am Haltesystem realisiert. Die Gewindesteigungen sind derart aneinander angepasst, dass zum Schwenken des Haltesystems das Bedienelement um die Drehachse gedreht werden muss. Es ist nicht möglich, das Haltesystem oder die im Haltesystem festgelegte Montageschiene direkt in die erste oder die zweite Schwenkrichtung zu bewegen, ohne das Bedienelement zu bedienen. Dies dient als Sicherungsmechanismus, da es nicht möglich ist, dass bei bestimmungsgemäßem Gebrauch des Stützfußes durch Krafteinwirkung auf die Montageschiene sich diese "von selbst" in die erste oder die zweite Schwenkrichtung bewegt. Zusätzliche Fixierungsmittel sind somit nicht notwendig, können aber optional am Stützfuß angebracht sein.

Die vorstehend in der Beschreibung genannten Merkmale und Merkmalskombinationen, Ausführungen und Ausgestaltungen der Erfindung, sowie die nachfolgend in der Figurenbeschreibung genannten und/oder in einer Figur gezeichneten Merkmale und Merkmalskombinationen sind nicht nur in der jeweils angegebenen oder gezeichneten Kombination, sondern auch in grundsätzlich beliebigen anderen Kombinationen oder aber einzeln verwendbar, innerhalb der in den Ansprüchen festgelegten Grenzen.

Die Erfindung wird nachfolgend anhand eines Ausführungsbeispiels erklärt. Es zeigen:
- Figur 1: einen erfindungsgemäßen Stützfuß mit einer Montageschiene in einer perspektivischen Darstellung;
- Figur 2: den erfindungsgemäßen Stützfuß aus Figur 1 in einer Explosionsdarstellung ohne Montageschiene; und
- Figur 3: eine Schnittdarstellung des Stützfußes aus Figur 1.

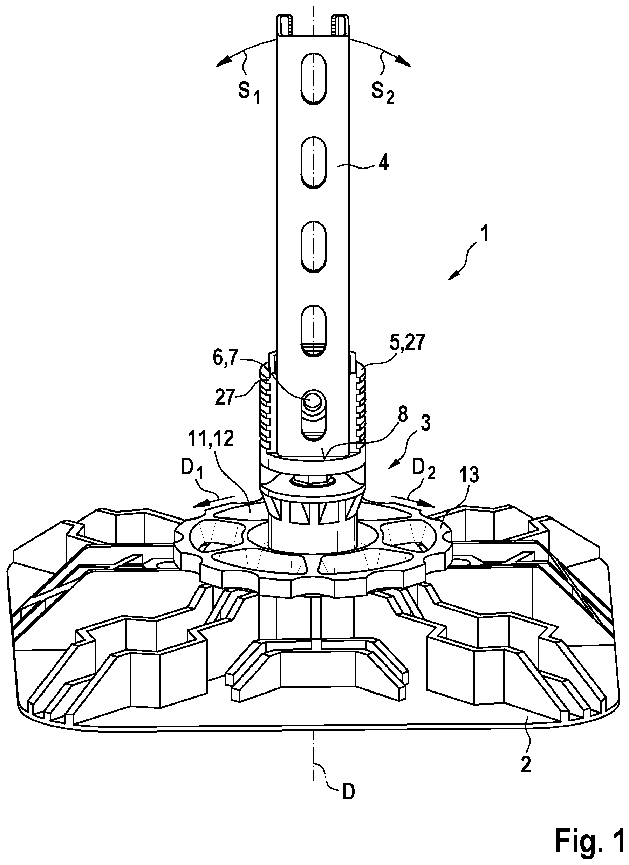

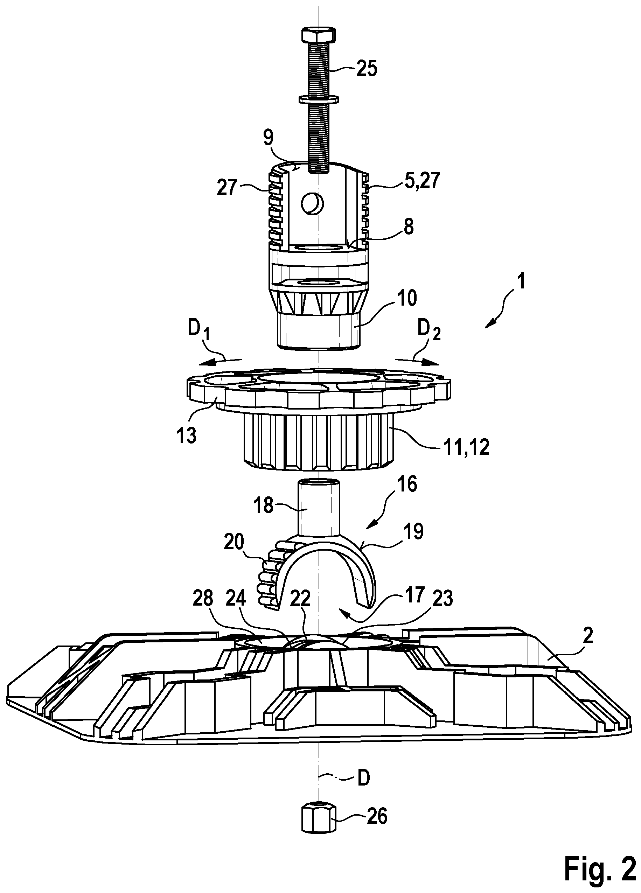

In den Figuren 1 bis 3 ist ein erfindungsgemäßer Stützfuß 1 in verschiedenen Darstellungen gezeigt. Der Stützfuß 1 umfasst einen rechteckigen, aus Kunststoff bestehenden Sockel 2, über welchen der Stützfuß 1 auf einem drucksensiblen Untergrund, wie einem Flachdach, zur Auflage kommt (nicht dargestellt). Der erfindungsgemäße Stützfuß 1 umfasst ein Haltesystem 3, über welches eine Montageschiene 4 an dem Stützfuß 1 befestigt werden kann. Zur Befestigung der Montageschiene 4 in dem Haltesystem 3 weist das Haltesystem 3 eine Halterung 5 auf, an welcher ein Haltemittel 6 in Form einer Hammerkopfschraube 7 angeordnet ist (siehe Figur 1). Die Montageschiene 4 liegt mit einem stirnseitigen Ende auf einer planen Stützfläche 8 auf. Über die Stützfläche 8 werden auf die Montageschiene 4 einwirkende Kräfte in den Sockel 2 eingeleitet. Die Halterung 5 weist zudem eine Anlagefläche 9 auf, welche orthogonal zur Stützfläche 8 angeordnet ist (siehe Figur 2). Mit Hilfe der Hammerkopfschraube 7 wird die Montageschiene 4 kraftschlüssig an der Halterung 5 festgelegt. Zusätzlich dienen zur Stabilisierung der Montageschiene 4 in der Halterung 5 zwei Stützstreben 27. Die Stützfläche 8 bildet somit zusammen mit der Anlagefläche 9 und den zwei Stützstreben 27 eine Aufnahme, in welche die Montageschiene 4 spielpassungsartig einsetzbar ist. Die Halterung 5 weist an einer Unterseite eine als Vertiefung ausgestaltete zylindrische Verbindungsaufnahme 10 auf.

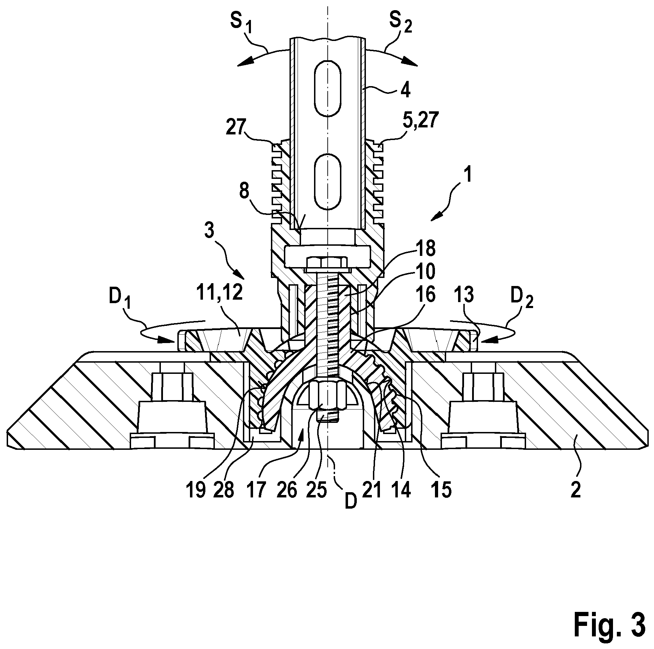

Über die Verbindungsaufnahme 10 ist ein gabelartiger respektive U-förmiger Schwenkbügel 16 mit der Halterung 5 verbindbar. Hierfür ist ein Verbindungszapfen 18, welcher spielpassungsartig mit der Verbindungsaufnahme 10 korrespondiert, in die Verbindungsaufnahme 10 einsteckbar. Figur 2 zeigt hierbei einen Vormontagezustand, wohingegen in den Figuren 1 und 3 der Verbindungszapfen 18 in die Verbindungsaufnahme 10 eingesetzt ist. Die Montageschiene 4 ist zusammen mit der Halterung 5 um den Verbindungszapfen 18 des Schwenkbügels 16 drehbar. Der Schwenkbügel 16 weist eine U-förmige Öffnung 17 und eine der Öffnung 17 abgewandte bogenförmige, respektive gekrümmte Außenfläche 19 auf. Auf der Außenfläche 19 ist ein Teilgewinde 20 angeordnet. Der Schwenkbügel 16 ist mit der Öffnung 17 auf eine Gleitfläche 21 des Sockels 2 aufgesetzt oder aufsetzbar. Die Gleitfläche 21 ist zentrisch im Sockel 2 angeordnet. Die Gleitfläche 21 ist durch eine erste und eine zweite Führung 22, 23 begrenzt, wodurch eine Nut 24 gebildet ist. Der Schwenkbügel 16 und somit die daran angeordnete Halterung 5 und die Montageschiene 4 sind in einer Ebene in eine erste Schwenkrichtung S₁ und in eine der ersten Schwenkrichtung S₁ entgegengesetzten Schwenkrichtung S₂ schwenkbar. Die Beweglichkeit des Schwenkbügels 16 zum Sockel 2 ist durch die Gleitfläche 21 und die erste und die zweite Führung 22, 23 begrenzt und somit ist keine anderweitige translatorische oder rotatorische Bewegung des Schwenkbügels 16 möglich.

Zwischen der Halterung 5 und dem Schwenkbügel 16 ist ein Bedienelement 11, welches als Bedienrad 12 ausgestaltet ist, angeordnet. Das Bedienrad 12 umfasst an einer Außenseite einen rändelartigen Griffbereich 13, welcher von einem Benutzer des Stützfußes 1 gegriffen werden kann. Das Bedienrad 12 ist ortsfest aber drehbar in einer Vertiefung 28 des Sockels 2 gelagert, wobei die Vertiefung 28 zentrisch im Sockel 2 angeordnet ist. Unter "ortsfest" ist zu verstehen, dass das Bedienrad 12 lediglich drehbar aber nicht verschiebbar in der Vertiefung 28 ist. Zudem ist die Gleitfläche 21 des Sockels 2 ebenfalls zentrisch bezüglich der Vertiefung 28 angeordnet so dass das Bedienrad 12 die Gleitfläche 21 umfasst und um diese drehbar ist. Das Bedienrad 12 weist eine gekrümmte Innenfläche 14 auf, wobei die Krümmung der Innenfläche 14 mit der Krümmung der Außenfläche 19 des Schwenkbügels 16 korrespondiert (siehe Figur 3). Auf der gekrümmten Innenfläche 14 des Bedienrads 12 ist ein Gewinde 15 angeordnet, welches in einem montierten Zustand des Stützfußes 1 (siehe Figuren 1 und 2) in das Teilgewinde 20 des Schwenkbügels 16 eingreift. Mit Hilfe einer Verbindungsschraube 25 und einer Verbindungsmutter 26 sind die Halterung 5, das Bedienrad 12 sowie der Schwenkbügel an dem Sockel 2 festgelegt oder festlegbar. Eine durch die Verbindungsschraube 25 und die Verbindungsmutter 26 erzeugte Klemmkraft darf nicht derart groß eingestellt sein, dass der Schwenkbügel 16 nicht mehr über die Gleitfläche 21 schwenkbar ist.

Figur 1 zeigt den Stützfuß 1 in einer Mittelposition, in welcher das Haltesystem 3 und somit die Montageschiene 4 senkrecht zu dem Fuß 2 und parallel zu einer Drehachse D orientiert ist. Die Drehachse D liegt in der Ebene, in der die Montageschiene 4 in die erste und zweite Schwenkrichtung S₁, S₂, schwenkbar ist. Um die Montageschiene 4 in die erste oder die zweite Schwenkrichtung S₁, S₂, schwenken zu können, muss ein Benutzer über den Griffbereich 13 des Bedienrads 12 dieses bezüglich der Drehachse D entweder in die erste Drehrichtung D₁ oder in die zweite Drehrichtung D₂ drehen, wobei die beiden Drehrichtungen entgegengesetzt orientiert sind. Durch die Drehung des Bedienrads 12 in eine der beiden Drehrichtungen D₁, D₂ wird das Gewinde 15 gedreht, wodurch die Drehbewegung auf das in das Gewinde 15 eingreifende Teilgewinde 20 übertragen wird. Hierdurch wird, abhängig von der Drehrichtung, der Schwenkbügel 16 entweder in die erste oder die zweite Schwenkrichtung S₁, S₂ geschwenkt. Das Gewinde 15 und das Teilgewinde 20 sind hierbei derart aufeinander abgestimmt, dass der Stützfuß 1 selbsthemmend gehalten ist. Anders formuliert kann sich eine einmal eingestellte Schwenkposition der Montageschiene 4 nicht "von selbst" unter Krafteinwirkung verstellen. Auch ist es nicht möglich, dass ein Benutzer die Montageschiene 4 oder das Haltesystem 3 direkt, ohne das Bedienrad 12 zu betätigen, schwenken kann. Durch die spezielle Schwenkmechanik kann die Montageschiene 4 in sehr kleinen Winkelschritten präzise geschwenkt werden. Durch die selbsthemmende Ausgestaltung ist es zudem nicht notwendig, die Position der Montageschiene 4 zusätzlich mit Fixierungsmitteln zu sichern.

### Bezugszeichenliste

- 1: Stützfuß
- 2: Sockel
- 3: Haltesystem
- 4: Montageschiene
- 5: Halterung des Haltesystems 3
- 6: Haltemittel des Haltesystems 3
- 7: Hammerkopfschraube des Haltesystems 3
- 8: Stützfläche der Halterung 5
- 9: Anlagefläche der Halterung 5
- 10: Verbindungsaufnahme der Halterung 5
- 11: Bedienelement
- 12: Bedienrad
- 13: Griffbereich des Bedienrads 12
- 14: gekrümmte Innenfläche des Bedienrads 12
- 15: Gewinde des Bedienrads 12
- 16: Schwenkbügel
- 17: Öffnung des Schwenkbügels 16
- 18: Verbindungszapfen des Schwenkbügels 16
- 19: Außenfläche des Schwenkbügels 16
- 20: Teilgewinde des Schwenkbügels 16
- 21: Gleitfläche des Sockels 2
- 22: erste Führung
- 23: zweite Führung
- 24: Nut
- 25: Verbindungsschraube
- 26: Verbindungsmutter
- 27: Stützstrebe
- 28: Vertiefung im Sockel 2
- D: Drehachse
- D₁: erste Drehrichtung
- D₂: zweite Drehrichtung
- S₁: erste Schwenkrichtung
- S₂: zweite Schwenkrichtung

## Patentansprüche

1. Stützfuß (1) zur Verwendung auf einem Untergrund, mit einem Sockel (2) zur Auflage auf dem Untergrund und mit einem Haltesystem (3) zur Aufnahme einer Montageschiene (4), wobei das Haltesystem (3) bezüglich des Sockels (2) in einer Ebene schwenkbar ist, wobei der Stützfuß (1) ein bezüglich des Sockels (2) ortsfestes aber um eine Drehachse (D) drehbares Bedienelement (11) umfasst, wobei die Drehachse (D) nicht senkrecht zur Ebene steht, das derart angeordnet ist, dass durch eine Drehung des Bedienelements (11) um die Drehachse (D) in einer ersten Drehrichtung (D₁), das Haltesystem (3) in der Ebene in eine erste Richtung (R₁) schwenkbar ist und durch eine Drehung in eine zweite Drehrichtung (D₂), die der ersten Drehrichtung (D₁) entgegengesetzt ist, das Haltesystem (3) in der Ebene in eine zweite, der ersten Richtung (R₁) entgegengesetzten Richtung (R₂), schwenkbar ist, wobei das Haltesystem (3) einen insbesondere U-förmigen Schwenkbügel (16) zu einer schwenkbaren Lagerung des Haltesystems (3) an dem Sockel (2) umfasst, wobei die Form einer Öffnung (17) des Schwenkbügels (16) mit der Form einer Gleitfläche (21) des Sockels (2) korrespondiert.

2. Stützfuß (1) nach Anspruch 1, **dadurch gekennzeichnet, dass** das Bedienelement (11) als ein Bedienrad (12) ausgestaltet ist, das ein Gewinde (15) oder eine Verzahnung umfasst, wobei das Gewinde (15) oder die Verzahnung in ein Teilgewinde (20) oder eine Teilverzahnung des Haltesystems (3) eingreift.

3. Stützfuß (1) nach Anspruch 2, **dadurch gekennzeichnet, dass** das Bedienrad (12) drehbar an dem Sockel (2) oder in einer korrespondierenden Vertiefung (28) im Sockel (2) gelagert ist.

4. Stützfuß (1) nach Anspruch 2 oder 3, **dadurch gekennzeichnet, dass** das Teilgewinde (20) auf einer der Öffnung (17) des Schwenkbügels (16) abgewandten Außenfläche (19) des Schwenkbügels (16) angeordnet ist.

5. Stützfuß (1) nach einem der Ansprüche 1 bis 4, **dadurch gekennzeichnet, dass** der Sockel (2) eine erste und eine zweite Führung (22, 23) zur Abstützung des Haltesystems (3) senkrecht zur Ebene aufweist.

6. Stützfuß (1) nach einem der Ansprüche 1 bis 5, **dadurch gekennzeichnet, dass** das Haltesystem (3) eine Halterung (5) zur form- und/oder kraftschlüssigen Aufnahme einer Montageschiene (4) aufweist.

7. Stützfuß (1) nach Anspruch 6, **dadurch gekennzeichnet, dass** die Halterung (5) an dem Schwenkbügel (16) festlegbar ist.

8. Stützfuß (1) nach einem der vorhergehenden Ansprüche, **dadurch gekennzeichnet, dass** das Bedienelement (11) das Haltesystem (3) selbsthemmend in einer eingestellten Position hält.

## Claims

1. Support foot (1) for use on a surface, with a base (2) for resting on the surface and with a retention system (3) for receiving a mounting rail (4), wherein the retention system (3) can be pivoted in a plane relative to the base (2), wherein the support foot (1) comprises a control element (11) that is fixed but can rotate about a pivot axis (D), wherein the pivot axis (D) is not perpendicular to the plane, and is arranged such that (2) but rotatable about an axis of rotation (D), wherein the axis of rotation (D) is not perpendicular to the plane, which is arranged in such a way that, by rotating the control element (11) about the axis of rotation (D) in a first direction of rotation (D₁), the retention system (3) can be pivoted in the plane in a first direction (R₁) and, by rotating in a second direction of rotation (D₂) opposite to the first direction of rotation (D₁), the retention system (3) can be pivoted in the plane in a second direction (R₂) opposite to the first direction (R₁), wherein the retention system (3) comprises a swivel bracket (16), in particular a U-shaped swivel bracket (16), for pivotable mounting of the holding system (3) on the base (2), wherein the shape of an opening (17) in the swivel bracket (16) corresponds to the shape of a sliding surface (21) on the base (2).

2. Support foot (1) according to claim 1, **characterized in that** the control element (11) is designed as a control wheel (12) comprising a thread (15) or a toothing, wherein the thread (15) or the toothing engages in a partial thread (20) or a partial toothing of the holding system (3).

3. Support foot (1) according to claim 2, **characterized in that** the control wheel (12) is rotatably mounted on the base (2) or in a corresponding recess (28) in the base (2).

4. Support foot (1) according to claim 2 or 3, **characterized in that** the partial thread (20) is arranged on an outer surface (19) of the swivel bracket (16) facing away from the opening (17) of the swivel bracket (16).

5. Support foot (1) according to one of claims 1 to 4, **characterized in that** the base (2) has a first and a second guide (22, 23) for supporting the holding system (3) perpendicular to the plane.

6. Support foot (1) according to one of claims 1 to 5, **characterized in that** the retention system (3) has a bracket (5) for receiving a mounting rail (4) in a form-fitting and/or force-fitting manner.

7. Support foot (1) according to claim 6, **characterized in that** the bracket (5) can be fixed to the swivel bracket (16).

8. Support foot (1) according to one of the preceding claims, **characterized in that** the control element (11) holds the retention system (3) in a set position in a self-locking manner.

## Revendications

1. Pied d'appui (1) destiné à être utilisé sur un sol, comprenant un socle (2) destiné à reposer sur le sol et un système de fixation (3) destiné à recevoir un rail de montage (4), le système de fixation (3) pouvant pivoter dans un plan par rapport au socle (2), le pied d'appui (1) comprend un élément de commande (11) fixe par rapport au socle (2) mais pouvant tourner autour d'un axe de rotation (D), l'axe de rotation (D) n'étant pas perpendiculaire au plan, qui est disposé de telle sorte que, par une rotation de l'élément de commande (11) autour de l'axe de rotation (D) dans un premier sens de rotation (D₁), le système de fixation (3) peut pivoter dans le plan dans une première direction (R₁) et, par une rotation dans un deuxième sens de rotation (D₂) opposé au premier sens de rotation (D₁), le système de fixation (3) peut pivoter dans le plan dans une deuxième direction (R₁), le système de fixation (3) comprenant un étrier pivotant (16) en particulier en forme de U pour un montage pivotant du système de fixation (3) sur le socle (2), la forme d'une ouverture (17) de l'étrier pivotant (16) correspondant à la forme d'une surface de glissement (21) du socle (2).

2. Pied d'appui (1) selon la revendication 1, **caractérisé en ce que** l'élément de commande (11) est conçu comme une molette (12) qui comprend un filetage (15) ou une denture, le filetage (15) ou la denture s'engageant dans un filetage partiel (20) ou une denture partielle du système de fixation (3).

3. Pied d'appui (1) selon la revendication 2, **caractérisé en ce que** la molette de commande (12) est montée de manière rotative sur le socle (2) ou dans un renfoncement correspondant (28) dans le socle (2).

4. Pied d'appui (1) selon la revendication 2 ou 3, **caractérisée en ce que** le filetage partiel (20) est disposé sur une surface extérieure (19) de l'étrier pivotant (16) opposée à l'ouverture (17) de l'étrier pivotant (16).

5. Pied d'appui (1) selon l'une des revendications 1 à 4, **caractérisée en ce que** le socle (2) comporte un premier et un deuxième guidage (22, 23) pour soutenir le système de maintien (3) perpendiculairement au plan.

6. Pied d'appui (1) selon l'une des revendications 1 à 5, **caractérisé en ce que** le système de fixation (3) comporte un support (5) destiné à recevoir par complémentarité de forme et/ou par adhérence un rail de montage (4).

7. Pied d'appui (1) selon la revendication 6, **caractérisé en ce que** le support (5) peut être fixé à l'étrier pivotant (16).

8. Pied d'appui (1) selon l'une des revendications précédentes, **caractérisé en ce que** l'élément de commande (11) maintient le système de fixation (3) dans une position réglée de manière autobloquante.
